# EUROPÄISCHE PATENTSCHRIFT

(11) **EP 4 246 496 B1**
(45) Veröffentlichungstag und Bekanntmachung des Hinweises auf die Patenterteilung: **25.02.2026**
(21) Anmeldenummer: 23155681.2
(22) Anmeldetag: 19.11.2019
(51) Int. Cl.: G09B 15/02, G09F 1/00, G06K 7/10

(54) **SMARTBOARD UND SET ZUM DIGITALISIEREN VON WORKSHOP-ERGEBNISSEN**
SMARTBOARD AND SET FOR DIGITALIZING WORKSHOP RESULTS
CARTE INTELLIGENTE ET ENSEMBLE POUR LA NUMÉRISATION DE RÉSULTATS D'ATELIER

(30) Priorität: 22.11.2018 CH 14452018
(43) Veröffentlichungstag der Anmeldung: 20.09.2023
(62) Teilanmeldung aus: 19805959.4
(73) Patentinhaber: Trihow AG, 6343 Rotkreuz Zug (CH)
(72) Erfinder: KNÜSEL, Beat, 6405 Immensee (CH)
(74) Vertreter: Zwick, Evelyn

(56) Entgegenhaltungen:
- DE-A1- 3 148 885
- US-A- 5 295 342
- US-A1- 2006 197 669
- US-A1- 2007 176 780
- US-A1- 2011 252 946
- US-A1- 2016 300 089

## Beschreibung

### Technisches Gebiet

Die Erfindung betrifft ein Smartboard zum Digitalisieren von Workshop-Ergebnissen, umfassend eine erste und eine zweite Oberfläche, die parallel zueinander ausgestaltet sind. Die Erfindung betrifft auch verschiedene Sets umfassend solche Smartboards.

### Stand der Technik

Als Arbeitsunterlagen für Workshops dienen beispielsweise Whiteboards, Pinnwände, Wandtafeln oder Tische. Auf solchen herkömmlichen Arbeitsunterlagen wie Whiteboards oder Pinnwänden notieren Teilnehmer beispielsweise ihre Ideen auf Zetteln und bringen diese daran an, damit alle sie sehen können. Anschliessend wird evaluiert, doppelte Nennungen werden entfernt, Ähnliche gebündelt, Wichtige mit weiteren Nennungen ausgeschmückt. Je nach Zweck des Workshops werden Reihenfolgen festgelegt und/oder Prioritäten gesetzt und am Ende Aufgaben und Verantwortlichkeiten zugeteilt.

Begleitet werden solche Workshops oft von Moderatoren, ausgestattet mit Moderatorenkoffern, die gut mit selbstklebenden Notizzetteln verschiedener Farben und Formen, Farbpunkten, Magnetknöpfen, Markern, Scheren, Stecknadeln und dergleichen bestückt sind. Die Arbeitsergebnisse können höchstens fotografisch festgehalten werden. Nach Fertigstellung werden sie aber nicht weiter verwendet, die Arbeitsunterlage wird wieder abgeräumt.

Andererseits sind elektronische Whiteboards, hier Smartboards genannt, bekannt, welche mit Elektronik bestückt sind, um verschiedene zusätzliche Funktionen zu übernehmen. Bekannt sind solche, die wie ein Tablet über einen Touchscreen, Schrifterkennung und weiteres mehr verfügen. So lassen sich vorerstellte Grafiken mit handschriftlichen Markierungen ergänzen und in geänderter Form abspeichern. Solche Smartboards sind aber sehr teuer und lassen sich, im Gegensatz zu einem Moderatorenkoffer, nicht einfach von einem Moderator mitbringen.

Aus der US 2007/176780 A1 ist ein Systeme zur Verwendung von RFIDs in Anzeigetafeln wie Whiteboards und Pinnwänden bekannt. Objekte mit RFID-Tags, welche eindeutig das entsprechende Objekt identifizieren, werden dort angebracht, sodass ihre Positionen und Identitäten auf der Tafel durch nahe platzierte RFID-Lesegeräte bestimmt werden können. Anschliessend können diese Informationen an ein Computergerät übermitteln werden. Optional kann der Empfang der Daten am Rechengerät weitere Ereignisse auslösen, beispielsweise die Ausgabe von Benachrichtigungen.

### Darstellung der Erfindung

Es ist die Aufgabe der vorliegenden Erfindung, ein Smartboard eingangs beschriebener Art zum Digitalisieren von Workshop-Ergebnissen zu beschreiben, das transportabel ist und das Arbeitsergebnisse in digitaler Form an einen Computer schicken kann, welcher diese weiterverarbeiten kann.

Die Erfindung wird gelöst durch die Merkmale des ersten Patentanspruchs. Erfindungsgemäss ist zwischen der ersten und der zweiten Oberfläche eines eingangs beschriebenen Smartboards eine Vielzahl von Taschen parallel zueinander angeordnet, wobei in jeder Tasche eine oder mehrere elektrisch miteinander verbundene Printplatten angeordnet sind, die eine Vielzahl von NFC Empfängern in einem Array umfassen. Zudem sind in jeder Tasche eine Vielzahl von Magneten in Form von Ferromagneten oder Permanentmagneten in einem Array angeordnet, wobei die Printplatten benachbarter Taschen miteinander elektronisch verbunden sind, vorzugsweise meanderförmig. Eine erste der Printplatten ist zudem mit einem Anschluss für eine Stromversorgung und für eine Datenausgabe versehen.

Ein erfindungsgemässes Set umfasst ein solches Smartboard und mindestens zwei oder mehr Objekte, wobei jedes Objekt mindestens ein Magnet in Form eines Permanentmagneten oder Ferromagneten sowie mindestens eine, vorzugsweise zwei RFID-Transponder umfasst.

### Kurze Beschreibung der Zeichnungen

Im Folgenden wird die Erfindung in verschiedenen Zeichnungen dargestellt und mit Hilfe der später erläuterten Bezugszeichen näher erklärt. Es zeigen:
- Fig. 1a, 1b: eine schematische Darstellung eines erfindungsgemässen Smartboards verbunden mit einem Computer, mit Sicht auf die erste Oberfläche (Fig. 1a) und auf die zweite Oberfläche (Fig. 1b);
- Fig. 2: eine schematische Innenansicht eines solchen Smartboards;
- Fig. 3a, 3b: eine schematische Teilansicht einer Innenansicht eines Smartboards in zwei alternativen Formen;
- Fig. 4: ein schematisch dargestellter Querschnitt durch einen Teilbereich eines Smartboards, an verschiedenen Stellen;
- Fig. 5: ein schematisch dargestellter Querschnitt durch ein aufgerolltes Smartboard
- Fig. 6: eine schematische Ansicht eines Objekts in Form einer Karte;
- Fig. 7: eine schematische Ansicht eines Objekts in Form einer Dose mit einem Innenraum;
- Fig. 8a, 8b: eine schematische Ansicht eines Verbindungselementes in zwei Ausführungsformen;
- Fig. 9: eine schematische Ansicht eines Smartbooks auf einem Smartboard;
- Fig. 10a, 10b: eine schematische Ansicht eines Clipboards (a) und ein dafür geeignetes Blatt Papier (b).

### Wege zur Ausführung der Erfindung

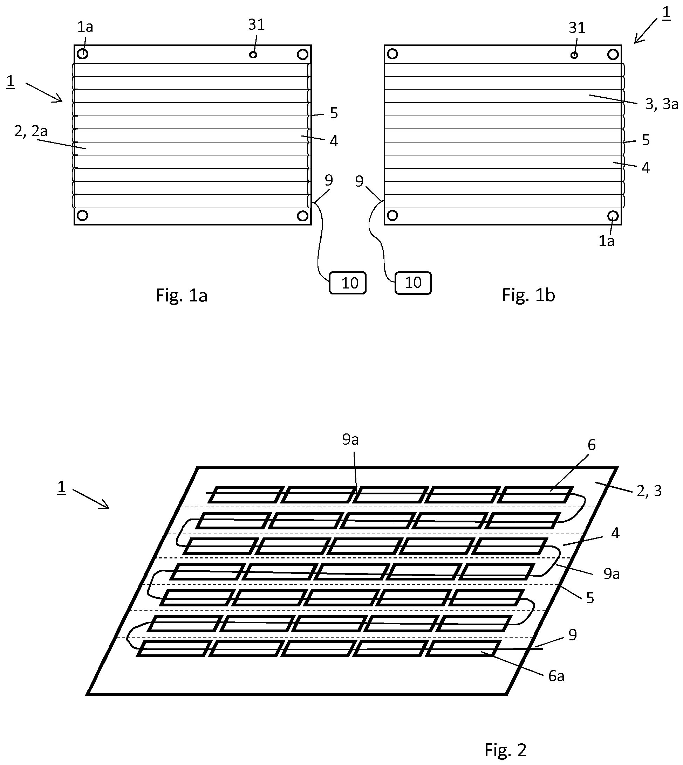

In Fig. 1a und 1b ist jeweils ein erfindungsgemässes Smartboard 1 zum Digitalisieren von Workshop-Ergebnissen dargestellt, umfassend eine erste Oberfläche 2 und eine zweite Oberfläche 3, die parallel zueinander ausgestaltet sind.

Ein solches Smartboard 1 lässt sich entweder auf einen Tisch legen oder an eine Wand oder auf ein herkömmliches Whiteboard hängen, wobei dafür am Smartboard 1 angebrachte Ösen 1a verwendet werden können. Am Smartboard 1 kann horizontal oder vertikal gearbeitet werden.

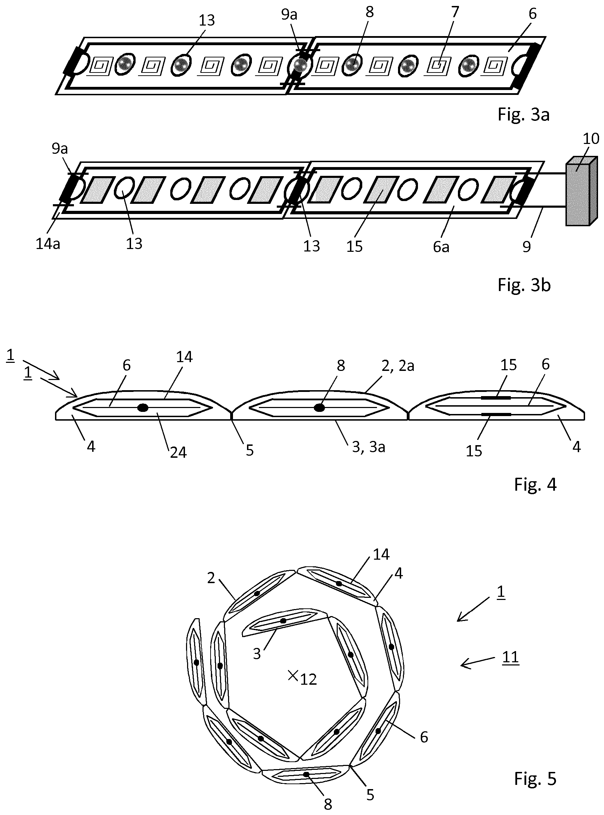

In Fig. 2 ist das Innere eines solchen Smartboards 1 dargestellt, Fig. 3a und 3b zeigen eine Vergrösserung einzelner Segmente davon. Zwischen diesen Oberflächen 2, 3 ist eine Vielzahl von Taschen 4 parallel zueinander angeordnet, die an Gelenken 5 miteinander verbunden sind. In jeder Tasche 4 sind eine oder mehrere elektrisch miteinander verbundene Printplatten 6 angeordnet, die eine Vielzahl von NFC Empfängern 7 in einem Array umfassen. Ebenfalls in jeder Tasche 4 sind eine Vielzahl von Magneten 8 in Form von Ferromagneten oder Permanentmagneten in einem Array angeordnet. Sie können in dafür vorgesehenen Aussparungen 13 in den Printplatten 6 gelagert sein. Wenn als Magnete 8 Permanentmagnete gewählt werden, insbesondere stabförmige, ist es vorteilhaft, wenn diese derart gelagert sind, dass sie sich ausrichten können. Vorzugsweise sind die NFC Empfänger 7 und die Magnete 8 jeweils alternierend im Array angeordnet. Wie in Fig. 3a und 3b dargestellt, können Printplatten 6 innerhalb einer Tasche 4 beispielsweise an elektrischen Verbindungen 9a zusammengesteckt werden, um elektronisch miteinander kontaktiert zu sein. Fig. 4 zeigt einen Querschnitt einzelner Taschen 4 im Bereich der Printplatten 6 und der Magnete 8.

Die Printplatten 6 benachbarter Taschen 4 sind an elektronischen Verbindungen 9a miteinander verbunden, vorzugsweise meanderförmig, wie in Fig. 2 dargestellt. Eine erste der Printplatten 6a ist mit einem Anschluss 9 versehen für die Verbindung zu einer Stromversorgung 10 und für eine Datenausgabe, um Daten beispielsweise an einen Computer 10 zu übermitteln.

Zudem können in den Taschen 4 ein oder mehrere durch einen Benutzer auslösbare Schalter 15 angeordnet sein, vorzugsweise Druckschalter. In einer bevorzugten Ausführung ist jedem NFC Empfänger 7 ein eigener Schalter 15 zugeordnet, wie in Fig. 3b dargestellt. Je nach Aufbau des Schalters 15 kann er derart ausgestaltet sein, dass er wahlweise von der ersten und/oder von der zweiten Oberfläche 2, 3 her durch einen Benutzer durch Drücken betätigbar ist, oder es können zwei gegenüberliegende Schalter 15 angeordnet sein, wie im rechten Teil der Fig. 4 dargestellt. Jeder Schalter 15 ist ebenfalls mit dem Anschluss 9 für die Datenausgabe verbunden.

Da die Taschen 4 gelenkig miteinander verbunden sind, lässt sich das Smartboard 1 zu einer Rolle 11 aufrollen mit einer Achse 12 parallel zu den lang ausgestalteten Taschen 4, wie in Fig. 5 dargestellt. Vorzugsweise weisen die Taschen 4 druckfeste Gehäuse 14 auf, in denen die Printplatten 6 und die Magnete 8 geschützt angeordnet sind. Die Schalter 15 sind schliesslich an diesen Gehäusen 14 angebracht, damit sie von aussen betätigbar sind, beispielsweise durch Drücken.

Vorzugsweise besteht mindestens die erste Oberfläche 2 aus einem flexiblen Material, insbesondere aus einem textilen Material wie aus einer Filzmatte 2a, sodass diese Oberfläche 2 von einem Pin oder von einer Nadel durchstechbar ist. Informationen können so einfach auf Zetteln geschrieben und an das Smartboard 1 angepinnt werden.

Alternativ oder zusätzlich dazu kann mindestens die zweite Oberfläche 3 aus einem druckfesten Material bestehen, vorzugsweise aus Kunststoffplatten 3a. Vorzugsweise ist diese spaltarm ausgestaltet, wenn das Smartboard 1 vollständig abgewickelt ist. Diese zweite Oberfläche 3 lässt sich einfach mit abwaschbaren Markern beschriften, und es lassen sich selbstklebende Notizzettel daran anbringen. Es ist auch möglich, beide Oberflächen 2, 3 gleichartig auszugestalten.

Mit einem derartigen Smartboard 1 lässt sich nun arbeiten. Informationen können auf verschiedene Arten auf dem Smartboard 1 angebracht werden. Das beschriebene oder bestückte Smartboard 1 ist modular erweiterbar durch weitere hier beschriebene Module 17, 19, 21, 23, 25, 28, welche zusammen mit dem Smartboard 1 ein Set 16 bilden. Jedes dieser Module 17, 19, 21, 23, 25, 28 lässt sich aber auch alleine oder in Zusammenhang mit anderen solchen Modulen 17, 19, 21, 23, 25, 28 oder mit hier nicht genannten Komponenten verwenden. Der Zweck soll dabei stets sein, Informationen in einer Gruppenarbeit oder Projektarbeit zu organisieren, zu speichern oder weiterzuleiten. Ein Coach führt und begleitet in der Regel solche Gruppenarbeiten und erklärt den Teilnehmern die Arbeitsweise mit dem Smartboard 1 und den Modulen 17, 21, 23, 25, 28.

So können beispielsweise Informationen auf geeignete, magnetisch haftende Module 17, 19, 21, 23, 25 geschrieben werden, die an den Magneten 8 im Smartboard 1 haften. Sie können auch übereinandergelegt, in Gruppen zusammengefasst, oder in eine logische Abfolgereihe gebracht werden. Zusätzliche Informationen können auch direkt an das Smartboard 1 angebracht werden.

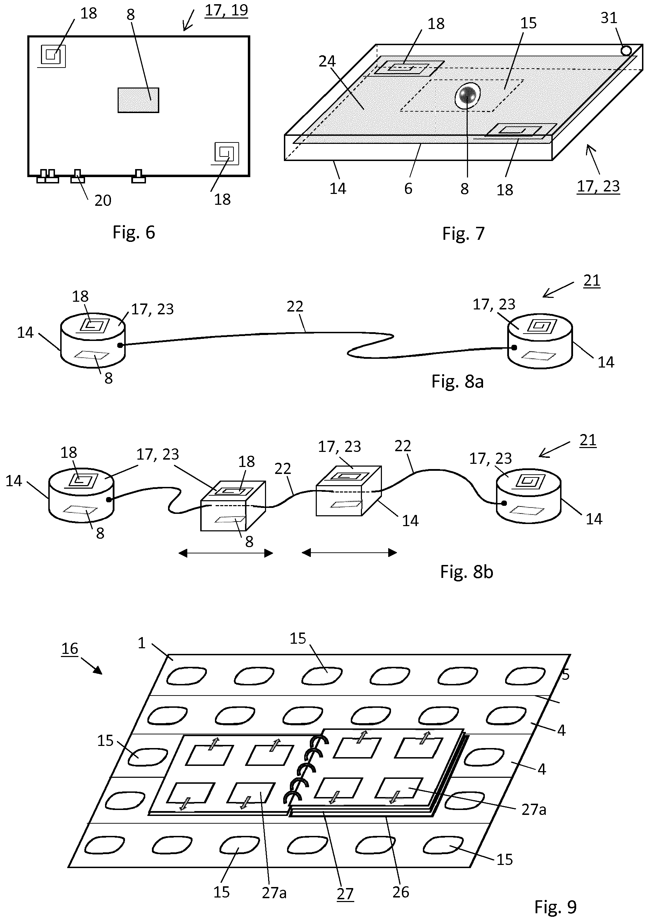

Ein erfindungsgemässes Set 16 umfasst beispielsweise ein Smartboard 1 sowie als Module zwei oder mehr Objekte 17, wie dargestellt in Fig. 6 oder 7. In der Regel wird eine Vielzahl solcher Objekte 17 verwendet. Jedes dieser Objekte 17 umfasst mindestens ein Magnet 8 in Form eines Permanentmagneten oder Ferromagneten sowie mindestens eine, vorzugsweise zwei RFID-Transponder 18. Die Objekte 17 können wahlweise auch einen Schalter 15 umfassen, insbesondere einen Druckschalter.

In einer ersten bevorzugten Ausführung gemäss Fig. 6 sind eines oder mehrere dieser Objekte 17 als Karte 19 ausgestaltet. Beispielsweise weisen die Karten 19 die Grösse und Form von Kreditkarten oder Visitenkarten auf. In einer bevorzugten Ausgestaltung weisen sie eine Kodierung 20 auf, beispielsweise in Form von Kerben. Solche Kodierungen 20 können helfen, Karten 19, die zu einer Gruppe gehören und alle dieselbe Kodierung 20 aufweisen, von anderen Karten 19 zu trennen. Dazu werden die Karten 19 in dafür vorgesehene Schachteln gegeben, welche am Boden Rillen aufweisen, die mit den Kerben 20 einer jeweiligen Gruppe korrespondieren. Karten 19, die nicht zu dieser Gruppe gehören und daher eine andere Kodierung 20 aufweisen, stehen an mindestens einer der Rillen an und erheben sich dadurch gegenüber den anderen Karten 19, die an diesen Stellen eine Kerbe 20 aufweisen. So können sie leicht aussortiert werden.

Eine zusätzliche Farbkodierung an der Seite kann beispielsweise die Reigenfolge der Karten 19 markieren, wenn jede Folgekarte 19 die Farbmarkierung ein wenig versetzt aufweist gegenüber ihrer Vorgängerkarte. Eine Kontrolle der Reihenfolge ist so sehr einfach möglich.

Alternativ zur Ausgestaltung als Karte 19 können die Objekte 17 als Dose 23 mit einem Gehäuse 24 und einem Innenraum 24 ausgestaltet sein, wie in Fig. 7 dargestellt. Eine Dose 23 ist im Unterschied zu einer Karte 19 griffiger. Im Innenraum 24 jeder Dose 23 können der oder die RFID-Transponder 18 und das Magnet 8 untergebracht sein, zudem kann zusätzlich auch ein Schalter 15 an der Dose 24 angebracht sein. Das Magnet 8 ist vorzugsweise in Form eines Permanentmagneten ausgestaltet und derart im Innenraum 24 gelagert, dass es sich frei ausrichten kann. Es können auch mehrere Magnete 8 vorgesehen sein. Auf einer Printplatte 6 können weitere geeignete Elektronikkomponenten angeordnet sein. Beispielsweise kann die Dose 23 über eine LED 31 verfügen, welche Rückmeldung nach Betätigung des Schalters 15 gibt. Die Speisung dafür kann über die RFID-Transponder 18 vom Smartboard 1 verlaufen. Die Dosen 23 schützen die im Innenraum 24 angeordneten Komponenten vor äusseren Kräfteeinwirkungen sowie vor Verschmutzung.

Solche Objekte 17 oder Karten 19 können bereits beschriftet sein oder während der Arbeit beschriftet werden. Dank ihrer Magnete 8 haften sie am Smartboard 1. Ihre RFID-Transponder 18 korrespondieren mit den NFC-Empfängern 7. Dadurch kann einem am Smartboard 1 angeschlossenen Computer 10 die ID Nummer der Karte 19 sowie die Position auf dem Smartboard 1 übermittelt werden, an der sie haftet. Der Karte 19 können weitere Eigenschaften zugeordnet sein, die in einer Datenbank gespeichert sind, auf welche der Computer 10 Zugriff hat. Zudem können weitere Aktionen hervorgerufen werden, wenn beispielsweise ein Schalter 15 des Smartboards 1 betätigt wird, bevor eine Karte 19 darauf angehaftet wird. Es können visuelle oder andere Informationen abgerufen werden oder es können Zuordnungen zur ID Nummer der jeweiligen Karte 19 erfolgen. Beispielsweise kann eine Zuordnung geschaffen werden wie «das nächste Foto, das mit einer dem Smartboard 1 zugeordneten Kamera gemacht wird, wird in einer Datenbank mit der ID Nummer derjenigen Karte 19 in Verbindung gesetzt, die auf den Schalter 15 gehaftet wird». So kann beispielsweise das Bild einer Person, die als Projektleiter eingesetzt werden soll, oder ein Bild eines Architekturmodells, dessen Realisierung erfolgen soll, einer Karte 19 zugeordnet werden. Beim erneuten Betätigen des Schalters 15 kann auf einem Display das entsprechende Bild abgebildet werden. Sind mehrere Karten 19 übereinander angeordnet, so werden entsprechend die Bilder all dieser Karten 19 angezeigt. Dies sind nur einige wenige Beispiele. Ein Managementsystem kann eine Vielzahl von Moderationsprogrammen enthalten, die unterschiedliche Anweisungen für Arbeiten mit dem Smartboard 1 und den verschiedenen Objekten 17, 19, 21, 23, 25, 28 aufführt. Entsprechend kann ein Managementsystem eine oder mehrere Schachteln von Karten 19 verschiedener Gruppen umfassen, wobei die ID Nummern der einzelnen Karten 19 bereits in einer Datenbank erfasst und mit gewissen Informationen in Korrelation gebracht sind.

Ein weiteres erfindungsgemässes Set 16 umfasst wiederum ein Smartboard 1 und Objekte 17, wie oben beschrieben. Zudem umfasst es ein oder mehrere Verbindungselemente 21, dargestellt in Fig. 8a und 8b. Ein Verbindungselement 21 umfasst zwei durch ein Verbindungsband 22 miteinander verbundene Objekte 17. Das Verbindungsband 22 stellt lediglich eine visuelle und strukturelle Verbindung der Objekte 17 dar, es kann elastisch sein. Die Objekte 17 können als Karten 19 ausgestaltet sein oder als Dosen 23, wie in Fig. 8a dargestellt. Werden die beiden Endpunkte des Verbindungsbandes 22 mit den Magneten 8 der Objekte 17 auf dem Smartboard 1 platziert, so kann eine Zuordnung der beiden Stellen dieser Endpunkte zueinander geschaffen werden. Dies kann eine zeitliche Reihenfolge bedeuten, eine Hierarchie, eine Zusammengehörigkeit oder dergleichen. Die Dosen 23 können wie in Fig. 7 beschrieben ausgestaltet sein. Insbesondere können sie ein Gehäuse 14 mit einem Innenraum 24 aufweisen.

In einer bevorzugten Ausführung eines Verbindungselementes 21, wie in Fig. 8b dargestellt, sind am Verbindungsband 22 ein oder zwei weitere solche Objekte 17 verschiebbar angebracht. Wenn nur ein weiteres Objekt 17 angebracht ist, kann es beispielsweise als Prozentangabe aufgefasst werden: eine Platzierung des verschiebbaren Objektes 17 mittig zwischen den Enden des Verbindungsbandes 22 bedeutet 50%, eine hälftige Verschiebung zu einem Ende entsprechend 25% oder 75%, je nach der vordefinierten Ausgangslage. Die Skalierung kann nicht beliebig fein aufgelöst werden, die Platzierung wird auf Grund der Platzierung der RFID-Transponder 18 durch die NFC Empfänger 7 erfasst.

Wenn zwei Objekte 17 im Verbindungsband 22 beweglich angeordnet sind, wie in Fig. 8b dargestellt, kann dies beispielsweise als Bereich zwischen Minimum und Maximum interpretiert werden, welche jeweils durch die Objekte 17 an den Enden des Verbindungsbandes 22 definiert sind. Die Erfassung der Positionen auf dem Smartboard 1 geschieht gleich wie bei nur einem verschiebbaren Objekt 17. Die Verbindungselemente 21 können wahlweise auf dem Smartboard 1 direkt oder auf Karten 17 platziert werden, wenn solche bereits auf dem Smartboard 1 angeordnet sind.

Die Objekte 17 eines Verbindungselementes 21 können wahlweise als Karte 19, wie in Fig. 6, oder als Dose 23 mit einem Innenraum 24 ausgestaltet sein, wie in Fig. 7 beschrieben.

In einer weiteren bevorzugten Ausführung umfasst ein Set 16 oder ein Smartboard 1 ein Objekt 17 in Form eines Smartbooks 25, dargestellt in Fig. 9. Voraussetzung dafür ist, dass jedem NFC Empfänger 7 des Smartboards 1 ein eigener Schalter 15 zugeordnet ist. Ein Smartbook 25 umfasst eine Platte 26, deren Länge sich über zwei oder mehr Arrayabstände von Schaltern 15 im Smartboard 1 und/oder deren Breite sich über zwei oder mehr Taschen 4 erstreckt. Die Platte 26 weist mehrere in einem Array oder Raster angeordnete Magnete 8 in Form von Ferromagneten oder Permanentmagneten auf sowie mindestens zwei RFID-Transponder 18, analog der Karte 19 aus Fig. 6. Zudem ist an ihr ein mehrseitiges Heft 27 angebracht, dessen Seiten mit Anweisungen und Auswahl-Varianten 27a versehen sind. Jeder dieser Varianten 27a kann ein Schalter 15 des Smartboards 1 zugeordnet werden, der unmittelbar um das Smartbook 25 herum angeordnet ist, wenn es, im Gebrauch, auf dem Smartboard 1 haftet. Beim Betätigen dieser Schalter 15 werden Zusatzinformationen abgerufen, die wiederum Anweisungen enthalten können. Zudem kann ein Schalter 15 definiert werden, der dann betätigt werden soll, wenn die Seite abgeschlossen ist. Danach wird umgeblättert und die Instruktionen der nächsten Seite werden befolgt, nachdem weitere Zusatzinformationen abgerufen wurden.

Solche Smartbooks 25 können für verschiedene Workshops oder Projekte gefertigt werden und den oder die Benutzer durch einen Prozess führen, beispielsweise durch einen Entscheidungsprozess. Die verschiedenen Aspekte (Preis, Qualität, Bedarf, Risiko etc.) können jeweils auf einer Seite ausgeleuchtet werden und die Varianten, die den Benutzern zur Auswahl stehen, den umliegenden Schaltern 15 auf dem Smartboard 1 zugeordnet sein. Das Smartboard 1 erkannt die Lage des Smartbooks 25 durch die beiden RFID-Transponder, die mit den NFC Empfängern auf dem Smartboard 1 korrespondieren. Auch hier werden alle Informationen, die durch die Benutzer auf dem Smartboard durch Betätigen der Schalter 15 eingegeben werden, an den Computer geschickt und dort weiterverarbeitet.

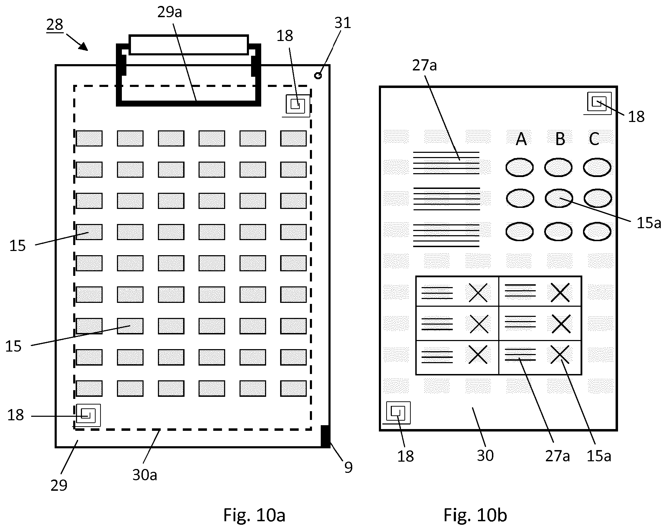

Zudem kann ein Clipboard 28 gemäss Fig. 10a als zusätzliches Modul mit dem Smartboard 1 oder mit einem genannten Set 16 verwendet werden. Ein Clipboard 28 umfasst eine Unterlage 29 mit Befestigung 29a für ein Blatt Papier 30, wie es in Fig. 10b dargestellt ist, und ist mit mindestens einem, vorzugsweise zwei RFID-Transpondern 18 versehen. Das Blatt Papier 30 selbst umfasst ebenfalls einen oder zwei RFID-Transponder 18, wobei mindestens je ein RFID-Transponder 18 der Unterlage 29 und des Blatt Papiers 30 miteinander in Kommunikationsnähe angeordnet werden, wenn das Blatt Papier 30 an der Befestigung 29a fixiert ist. Vorzugsweise weist die Unterlage 29 eine Markierung 30a auf, welche angibt, wo genau das Blatt Papier 30 platziert werden soll. Die Unterlage 29 kann zudem eine Vielzahl von Schaltern 15 umfassen, vorzugsweise in einer Matrix angeordnet. Sie können gekennzeichnet oder hinter einer Oberfläche im Verborgenen angeordnet sein. Entsprechend dem Smartbook 25 kann auch das Blatt Papier 30 ein Teil einer Sammlung von vorgefertigten Blättern Papier 30 sein. Jedes dieser Blätter 30 ist mit verschiedenen Informationen, Anweisungen und Auswahl-Varianten 27a versehen sowie mit mehreren Kennzeichnungsfeldern 15a, die jeweils an den Orten der Schalter 15 des Clipboard 28 angeordnet sind, wenn das Blatt 30 auf der Markierung 30a der Unterlage 29 befestigt ist. Der Benutzer betätigt jeweils je nach Situation die entsprechenden Schalter 15, indem er beispielsweise darauf drückt. In Fig. 10b sind die Kennzeichnungsfelder 15a, die auswahlweise betätigbar sind, durch Kreise gekennzeichnet, die unter den Buchstaben A, B und C angeordnet sind. Weitere Kennzeichnungsfelder 15a befinden sich an den Stellen der Kreuze der unteren Tabelle. Der Benutzer betätigt je nach dem, was zutrifft, die entsprechenden Schalter 15 auf dem Clipboard 28, indem er auf die Kennzeichnungsfelder 15a drückt.

Das Clipboard 28 umfasst zudem einen Anschluss 9, der auch eine drahtlose Schnittstelle sein kann, mit dem die erfassten Daten an einen Computer 10 übermittelt werden.

Das Clipboard 28 kann auch ein oder mehrere LEDs 31 umfassen, um Feedback für getätigte Aktionen zu geben oder um Informationen zu erhalten. Beispielsweise kann durch ein Leuchten der LED 31 angezeigt werden, dass auf einem Bildschirm Informationen zu einem gewissen Sachverhalt dargestellt sind.

Die Set 16 umfassend ein Smartboard 1 und ein Objekt 17, wobei das Objekt eine Karte 19, eine Dose 23, ein Verbindungselement 21 oder ein Clipboard 28 ist, ist nicht als solches in den Figuren gekennzeichnet. Die Objekte 19, 21, 23 und 28 sind nur allein dargestellt, ohne Smartboard 1. Nur das Set 16 umfassend ein Smartboard 1 und ein Smartbook 25 ist in Fig. 9 dargestellt. Sämtliche hier beschriebenen Objekte 17, 19, 21, 23, 25 und 28 können auch allein oder in Kombination mit anderen Objekten 17, 19, 21, 23, 25 und 28 benutzt werden. Eine Karte 19, eine Dose 23, ein Verbindungselement 21 oder eine Clipboard 28, wie jeweils hier beschrieben, sind aber keine Erfindungsgegenstände dieser Erfindung.

### Bezugszeichenliste

| | | | |
|---|---|---|---|
| 1 | Smartboard | 1a | Ösen |
| 2 | Erste Oberfläche; | 2a | Filzmatte |
| 3 | Zweite Oberfläche; | 3a | Kunststoffplatte |
| 4 | Tasche | | |
| 5 | Gelenk | | |
| 6 | Printplatte | 6a | erste Printplatte |
| 7 | NFC Empfänger | | |
| 8 | Magnet, Ferromagnet oder Permanentmagnet | | |
| 9 | Anschluss | 9a | elektrische Verbindung |
| 10 | Stromversorgung, Computer | | |
| 11 | Rolle | | |
| 12 | Achse | | |
| 13 | Aussparung | | |
| 14 | Gehäuse | 14a | Gehäuseteil |
| 15 | Schalter, Druckschalter | 15a | Kennzeichnungsfeld für einen Schalter |
| 16 | Set | | |
| 17 | Objekt | | |
| 18 | RFID-Transponder | | |
| 19 | Karte | | |
| 20 | Kodierung, Kerbe | | |
| 21 | Verbindungselement | | |
| 22 | Verbindungsband | | |
| 23 | Dose | | |
| 24 | Innenraum | | |
| 25 | Smartbook | | |
| 26 | Platte | | |
| 27 | Heft | 27a | Informationen, Anweisungen, Auswahl-Varianten |
| 28 | Clipboard | | |
| 29 | Unterlage | 29a | Befestigung |
| 30 | Blatt Papier | 30a | Markierung für ein Blatt Papier |
| 31 | LED | | |

## Patentansprüche

1. Smartboard (1) zum Digitalisieren von Workshop-Ergebnissen, umfassend eine erste und eine zweite Oberfläche (2, 3), die parallel zueinander ausgestaltet sind, **dadurch gekennzeichnet, dass**
zwischen diesen Oberfläche (2, 3) eine Vielzahl von Taschen (4) parallel zueinander angeordnet ist, wobei in jeder Tasche (4) eine oder mehrere elektrisch miteinander verbundene Printplatten (6) angeordnet sind, die eine Vielzahl von NFC Empfängern (7) in einem Array umfassen, wobei ebenfalls in jeder Tasche (4) eine Vielzahl von Magneten (8) in Form von Ferromagneten oder Permanentmagneten in einem Array angeordnet sind, wobei die Printplatten (6) benachbarter Taschen (4) elektronisch miteinander verbunden sind, vorzugsweise meanderförmig, und eine erste der Printplatten (6a) mit einem Anschluss (9) für eine Stromversorgung (10) und für eine Datenausgabe versehen ist.

2. Smartboard (1) nach Anspruch 1, **dadurch gekennzeichnet, dass** die Taschen (4) gelenkig miteinander verbunden sind, sodass das Smartboard (1) zu einer Rolle (11) aufrollbar ist mit einer Achse (12) parallel zu den Taschen (4).

3. Smartboard (1) nach Anspruch 1 oder 2, **dadurch gekennzeichnet, dass** die Printplatten (6) Aussparungen (13) aufweisen, in welchen die Magnete (8) gelagert sind.

4. Smartboard (1) nach Anspruch 3, **dadurch gekennzeichnet, dass** die Magnete (8) Permanentmagnete sind, vorzugsweise stabförmige, wobei sie derart gelagert sind, dass sie sich ausrichten können.

5. Smartboard (1) nach einem der vorhergehenden Ansprüche, **dadurch gekennzeichnet, dass** die Taschen (4) druckfeste Gehäuse (14) aufweisen, in denen sich die Printplatten (6) und die Magnete (8) befinden.

6. Smartboard (1) nach einem der vorhergehenden Ansprüche, umfassend einen oder mehrere durch einen Benutzer auslösbare Schalter (15), vorzugsweise Druckschalter, die mit dem Anschluss (9) für die Datenausgabe verbunden sind.

7. Smartboard (1) nach Anspruch 6, **dadurch gekennzeichnet, dass** jedem NFC Empfänger (7) ein eigener Schalter (15) zugeordnet ist.

8. Smartboard (1) nach Anspruch 7, **dadurch gekennzeichnet, dass** jeder Schalter (15) wahlweise von der ersten und/oder von der zweiten Oberfläche (2, 3) her durch einen Benutzer durch Drücken betätigbar ist.

9. Smartboard (1) nach einem der vorhergehenden Ansprüche, **dadurch gekennzeichnet, dass** mindestens die erste Oberfläche (2) aus einem flexiblen Material besteht, das von einem Pin oder von einer Nadel durchstechbar ist, insbesondere aus einem textilen Material, und vorzugsweise aus einer Filzmatte (2a).

10. Smartboard (1) nach einem der vorhergehenden Ansprüche, **dadurch gekennzeichnet, dass** mindestens die zweite Oberfläche (3) aus einem druckfesten Material besteht, vorzugsweise aus Kunststoffplatten (3a).

11. Smartboard (1) nach Anspruch 10, **dadurch gekennzeichnet, dass** die zweite Oberfläche (3) eine spaltarme Fläche bildet, wenn das Smartboard (1) vollständig abgewickelt ist.

12. Set (16) umfassend ein Smartboard (1) nach einem der vorhergehenden Ansprüche sowie zwei oder mehr Objekte (17), wobei jedes Objekt (17) mindestens ein Magnet (8) in Form eines Permanentmagneten oder Ferromagneten sowie mindestens eine, vorzugsweise zwei RFID-Transponder (18) umfasst.

13. Set (16) nach Anspruch 12, **dadurch gekennzeichnet, dass** eines oder mehrere der Objekte (17) auch einen Schalter (15) umfasst, insbesondere einen Druckschalter.

14. Set (16) nach Anspruch 12 oder 13, **dadurch gekennzeichnet, dass** eines oder mehrere der Objekte (17) als Karte (19) ausgestaltet ist und eine Kodierung (20) aufweist, vorzugsweise in Form von Kerben.

15. Set (16) nach Anspruch 12 oder 13, **dadurch gekennzeichnet, dass** zwei der Objekte (17) durch ein Verbindungsband (22) zu einem Verbindungselement (21) miteinander verbunden sind.

16. Set (16) nach Anspruch 15, wobei an diesem Verbindungsband (22) des Verbindungselementes (21) ein oder zwei weitere solche Objekte (17) verschiebbar angebracht sind.

17. Set (16) nach einem der Ansprüche 15 oder 16, **dadurch gekennzeichnet, dass** jedes Objekt (17) eines Verbindungselementes (21) als Dose (23) mit einem Innenraum (24) ausgestaltet ist.

18. Set (16) nach Anspruch 17, **dadurch gekennzeichnet, dass** alle Magnete (8) dieser Objekte (17) in Form von Permanentmagneten ausgestaltet und derart im Innenraum (24) gelagert sind, dass sie sich frei ausrichten können.

19. Set (16) umfassend ein Smartboard (1) nach einem der Ansprüche 7 bis 11, oder ein Set (16) nach einem der Ansprüche 12 bis 18 mit Rückbezug auf Anspruch 7, umfassend ein Smartbook (25) mit einer Platte (26), deren Länge sich über zwei oder mehr Arrayabstände von Schaltern (15) im Smartboard (1) und/oder deren Breite sich über zwei oder mehr Taschen (4) erstreckt, wobei die Platte (26) mehrere in einem Array oder Raster angeordnete Magnete (8) in Form von Ferromagneten oder Permanentmagneten aufweist sowie mindestens zwei RFID-Transponder (18), wobei an der Platte (26) ein mehrseitiges Heft (27) angebracht ist, dessen Seiten mit Anweisungen und Auswahl-Varianten (27a) versehen sind, wobei jede Variante (27a) einem Schalter (15) des Smartboards (1) zugeordnet werden kann, der, wenn das Smartbook (25) beim Gebrauch auf dem Smartboard (1) angehaftet ist, unmittelbar um das Smartbook (25) herum angeordnet ist.

## Claims

1. A Smartboard (1) for digitizing workshop results, comprising a first and a second surface (2, 3) which are configured parallel to one another, **characterized in that** between these surfaces (2, 3) a plurality of pockets (4) is arranged parallel to one another, wherein each pocket (4) contains one or more printed circuit boards (6) electrically connected to one another, the printed circuit boards (6) comprising a plurality of NFC receivers (7) in an array, wherein each pocket (4) further contains a plurality of magnets (8) in the form of ferromagnets or permanent magnets arranged in an array, wherein the printed circuit boards (6) of adjacent pockets (4) are electronically connected to one another, preferably in a meander configuration, and a first of the printed circuit boards (6a) is provided with a connector (9) for a power supply (10) and for data output.

2. The Smartboard (1) according to claim 1, **characterized in that** the pockets (4) are pivotably connected to one another, so that the Smartboard (1) is rollable into a coil (11) with an axis (12) parallel to the pockets (4).

3. The Smartboard (1) according to claim 1 or 2, **characterized in that** the printed circuit boards (6) include recesses (13) in which the magnets (8) are seated.

4. The Smartboard (1) according to claim 3, **characterized in that** the magnets (8) are permanent magnets, preferably rod-shaped, wherein they are mounted in such a manner that they are able to self-align.

5. The Smartboard (1) according to any one of the preceding claims, **characterized in that** the pockets (4) include pressure-resistant housings (14) enclosing the printed circuit boards (6) and the magnets (8).

6. The Smartboard (1) according to any one of the preceding claims, comprising one or more switches (15) actuable by a user, preferably pushbutton switches, which are connected to the connector (9) for data output.

7. The Smartboard (1) according to claim 6, **characterized in that** each NFC receiver (7) is assigned a dedicated switch (15).

8. The Smartboard (1) according to claim 7, **characterized in that** each switch (15) is actuatable by a user from the first and/or from the second surface (2, 3) by pressing.

9. The Smartboard (1) according to any one of the preceding claims, **characterized in that** at least the first surface (2) is formed of a flexible material that can be pierced by a pin or needle, in particular a textile material, and preferably a felt mat (2a).

10. The Smartboard (1) according to any one of the preceding claims, **characterized in that** at least the second surface (3) is formed of a pressure-resistant material, preferably plastic panels (3a).

11. The Smartboard (1) according to claim 10, **characterized in that** the second surface (3) forms a low-gap planar face when the Smartboard (1) is fully unrolled.

12. A kit (16) comprising the Smartboard (1) according to any one of the preceding claims, and two or more objects (17), wherein each object (17) comprises at least one magnet (8) in the form of a permanent magnet or ferromagnet, and at least one, preferably two, RFID transponders (18).

13. The kit (16) according to claim 12, **characterized in that** one or more of the objects (17) further comprises a switch (15), in particular a pushbutton switch.

14. The kit (16) according to claim 12 or 13, **characterized in that** one or more of the objects (17) is configured in the form of a card (19) and includes a coding (20), preferably in the form of notches.

15. The kit (16) according to claim 12 or 13, **characterized in that** two of the objects (17) are connected to one another by a linking strap (22) forming a linking element (21).

16. The kit (16) according to claim 15, **characterized in that** one or two additional objects (17) are slidably mounted on this linking strap (22) of the linking element (21).

17. The kit (16) according to claim 15 or 16, **characterized in that** each object (17) of a linking element (21) is configured as a canister (23) with an inner cavity (24).

18. The kit (16) according to claim 17, **characterized in that** all magnets (8) of these objects (17) are configured in the form of permanent magnets and are mounted in the inner cavity (24) in such a manner that they are able to freely self-align.

19. The kit (16) comprising a Smartboard (1) according to any one of claims 7 to 11, or a kit (16) according to any one of claims 12 to 18 referencing claim 7, comprising a Smartbook (25) with a plate (26), the length of which spans two or more array spacings of switches (15) in the Smartboard (1) and/or the width of which spans two or more pockets (4), wherein the plate (26) comprises multiple magnets (8) arranged in an array or grid in the form of ferromagnets or permanent magnets, and at least two RFID transponders (18), wherein attached to the plate (26) is a multi-page booklet section (27), the pages of which provide instructions and selection variants (27a), wherein each variant (27a) can be assigned to a switch (15) of the smartboard (1), which, when the Smartbook (25) is attached to the Smartboard (1) during use, is located immediately around the Smartbook (25).

## Revendications

1. Tableau numérique interactif (1) pour la numérisation de résultats d'atelier, comprenant une première et une deuxième surface (2, 3) parallèles l'une à l'autre, **caractérisé en ce que** : une pluralité de poches (4) sont disposées parallèlement entre ces surfaces (2, 3), dans lequel chaque poche (4) contient une ou plusieurs cartes de circuits imprimés (6) interconnectées électriquement, qui comprennent une pluralité de récepteurs NFC (7) disposés en réseau, dans lequel chaque poche (4) contient également une pluralité d'aimants (8) sous forme d'aimants ferromagnétiques ou d'aimants permanents, disposés en réseau ; dans lequel les cartes de circuits imprimés (6) de poches (4) adjacentes sont interconnectées électroniquement, de préférence en forme sinueuse, et une première carte de circuit imprimé (6a) est dotée d'une connexion (9) pour une alimentation (10) et une sortie de données.

2. Tableau numérique interactif (1) selon la revendication 1, **caractérisé en ce que** les poches (4) sont articulées les unes aux autres, de sorte que le tableau numérique interactif (1) puisse être enroulé en un rouleau (11) dont l'axe (12) est parallèle aux poches (4).

3. Tableau numérique interactif (1) selon la revendication 1 ou 2, **caractérisé en ce que** les cartes de circuits imprimés (6) comportent des cavités (13) dans lesquelles sont montés les aimants (8).

4. Tableau numérique interactif (1) selon la revendication 3, **caractérisé en ce que** les aimants (8) sont des aimants permanents, de préférence en forme de bâtonnet, dans lequel ils sont montés de manière à pouvoir s'autoaligner.

5. Tableau numérique interactif (1) selon une des revendications précédentes, **caractérisé en ce que** les poches (4) comportent des boîtiers résistants à la pression (14), dans lesquels sont logés les cartes de circuits imprimés (6) et les aimants (8).

6. Tableau numérique interactif (1) selon une des revendications précédentes, comprenant un ou plusieurs interrupteurs (15) actionnables par un utilisateur, de préférence des boutons-poussoirs, sont connectés au port de sortie de données (9).

7. Tableau numérique interactif (1) selon la revendication 6, **caractérisé en ce que** chaque récepteur NFC (7) est associé à son propre interrupteur (15).

8. Tableau numérique interactif (1) selon la revendication 7, **caractérisé en ce que** chaque interrupteur (15) peut être actionné sélectivement par un utilisateur en appuyant dessus depuis la première et/ou la deuxième surface (2, 3).

9. Tableau numérique interactif (1) selon une des revendications précédentes, **caractérisé en ce que** au moins la première surface (2) est constituée d'un matériau flexible, qui peut être percé par une épingle ou une aiguille, notamment un matériau textile et de préférence un tapis en feutre (2a).

10. Tableau numérique interactif (1) selon une des revendications précédentes, **caractérisé en ce que** sa deuxième surface (3) est constituée d'un matériau résistant à la pression, de préférence de feuilles de plastique (3a).

11. Tableau numérique interactif (1) selon la revendication 10, **caractérisé en ce que** sa deuxième surface (3) forme une surface pratiquement sans interstices lorsque le tableau numérique interactif (1) est entièrement déroulé.

12. Ensemble (16) comprenant un tableau numérique interactif (1) selon une des revendications précédentes ainsi que deux ou plusieurs objets (17), dans lequel chaque objet (17) comprend au moins un aimant (8) sous la forme d'un aimant permanent ou ferromagnétique et au moins un, de préférence deux, transpondeurs RFID (18).

13. Ensemble (16) selon la revendication 12, **caractérisé en ce qu'**un ou plusieurs des objets (17) comprennent également un interrupteur (15), notamment un boutonpoussoir.

14. Ensemble (16) selon la revendication 12 ou 13, **caractérisé en ce qu'**un ou plusieurs des objets (17) sont conçus comme une carte (19) et présentent un code (20), de préférence sous forme d'encoches.

15. Ensemble (16) selon la revendication 12 ou 13, **caractérisé en ce que** deux des objets (17) sont reliés l'un à l'autre par une bande de liaison (22) pour former un élément de liaison (21).

16. Ensemble (16) selon la revendication 15, dans lequel un ou deux autres objets (17) sont fixés de manière coulissante à cette bande de liaison (22) de l'élément de liaison (21).

17. Ensemble (16) selon la revendication 15 ou 16, **caractérisé en ce que** chaque objet (17) d'un élément de liaison (21) est conçu comme un récipient (23) doté d'un espace intérieur (24).

18. Ensemble (16) selon la revendication 17, **caractérisé en ce que** tous les aimants (8) de ces objets (17) sont conçus sous forme d'aimants permanents et sont montés dans l'espace intérieur (24) de manière à pouvoir s'aligner librement.

19. Ensemble (16) comprenant un tableau numérique interactif (1) selon une des revendications 7 à 11, ou un ensemble (16) selon une des revendications 12 à 18 en référence à la revendication 7, comprenant un livre interactif (25) avec une plaque (26), dont la longueur dépasse deux ou plusieurs espacements de matrice de commutateurs (15) dans le tableau numérique interactif (1) et/ou dont la largeur dépasse deux ou plusieurs poches (4), ou s'étend à davantage de poches (4), dans lequel la plaque (26) comporte plusieurs aimants (8) disposés en réseau ou en grille sous forme d'aimants ferromagnétiques ou d'aimants permanents ainsi qu'au moins deux transpondeurs RFID (18), dans lequel un livret de plusieurs pages (27) est fixé à la plaque (26), dont les pages contiennent des instructions et des options de sélection (27a), dans lequel chaque option (27a) peut être associée à un commutateur (15) du tableau numérique interactif (1), lorsque le livret (25) est fixé au tableau numérique interactif (1) pendant son utilisation, est disposé directement autour du livret interactif (25).
